# EUROPEAN PATENT SPECIFICATION

(11) **EP 1 078 480 B1**
(45) Date of publication and mention of the grant of the patent: **22.06.2005**
(21) Application number: 99947060.2
(22) Date of filing: 19.04.1999
(51) Int. Cl.: H04B 10/22

(54) **A DEVICE AND METHOD FOR WIRELESS DATA TRANSMISSION**
ANORDNUNG UND VERFAHREN ZUR DRAHTLOSEN DATENÜBERTRAGUNG
DISPOSITIF ET PROCEDE POUR LA TRANSMISSION SANS FIL DE DONNEES

(30) Priority: 24.04.1998 SE 9801443
(43) Date of publication of application: 28.02.2001
(73) Proprietor: Telefonaktiebolaget LM Ericsson (publ), 164 83 Stockholm (SE)
(72) Inventor: HEDBERG, Anders, S-224 72 Lund (SE)
(74) Representative: Petri, Stellan
(86) International application number: PCT/SE1999/000617
(87) International publication number: WO 1999/056417

(56) References cited:
- GB-A- 2 298 752
- US-A- 4 460 259
- US-A- 4 829 168
- US-A- 5 307 297
- US-A- 5 459 336
- US-A- 5 470 154

## Description

### Field of the Invention

The present invention relates to a device in such an appliance as a mobile telephone, a lap top computer or the like for wireless data transmission by means of IR light between such appliances, the device comprising means for transmitting IR light and means for receiving IR light. It also relates to a method for such wireless data transmission.

### Background of the Invention

The normal purposes for a mobile telephone and for a lap top computer, respectively, are well known. Data created in a portable lap top computer may have to be transmitted to a stationary computer or computer network. This is possible not only by means of the traditional floppy disk but also more recently via a mobile telephone system.

Conventionally, the mobile telephone can be connected to the lap top computer by means of a special connecting cord. More recently, however, it has become possible to transmit data between a mobile telephone and a lap top computer wireless by means of IR light. The mobile telephone and the lap top computer are each provided with a device with separate means for transmitting IR light (in the form of an LED) and for receiving such light (in the form of a photodiode). These two means are arranged in a common device, which is intended for mounting on an internal PCB of the appliance and is provided with two lenses, one for each means. The device is also provided with electronic circuitry for the handling of transmitted and received signals. Such a device is shown in US-A-5 459 336.

The main drawback with such a presently used device is that it occupies a certain volume in an environment where space saving is essential.

### The Invention

A device which decreases this drawback is according to the invention attained in that one single LED is utilized as the means both for transmitting and receiving IR light. The LED hereby acts as a so called transceiver.

Besides the space saving advantage it is also easier to mount a device according to the invention, and the transmission security can be enhanced by the use of a slightly larger lens. It is also obvious that a device according to the invention can be cost saving in relation to a traditional device.

### The Drawing

The invention will be further described below under reference to the accompanying drawing, in which
Fig 1 is a perspective illustration of data transmission between a mobile telephone and a lap top computer,
Fig 2 illustrates a known device for transmitting and receiving IR light, and
Fig 3 illustrates a transceiver device according to the invention for transmitting and receiving IR light.

### Detailed Description of Embodiments

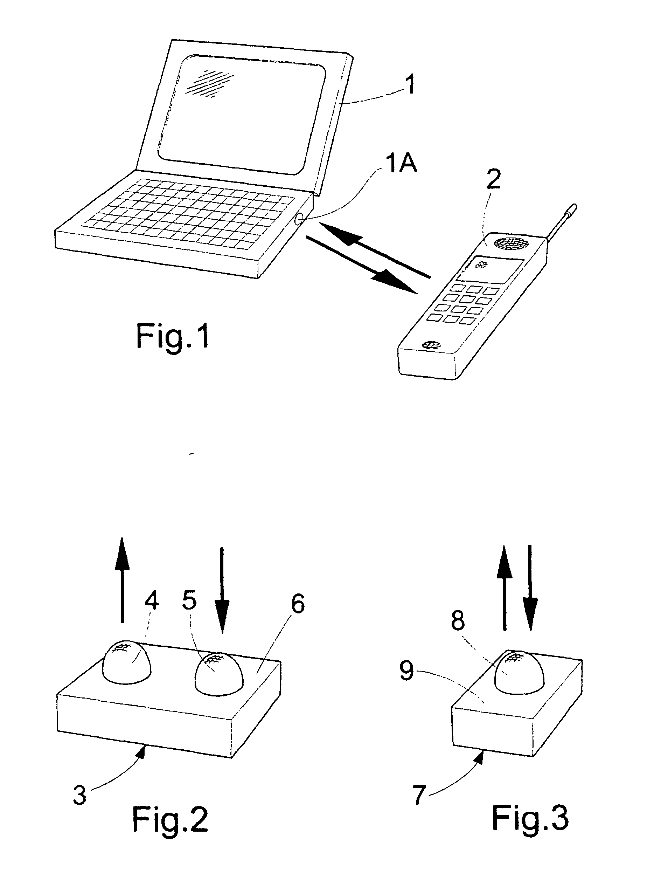

Fig 1 is a schematic illustration of a lap top computer 1 and a mobile telephone 2. Conventionally, data submitted to and from the telephone 2 via the ordinary mobile telephone system from and to an office computer, respectively, is transmitted to the lap top computer over a connecting cord. More recently, however, IR technique has been utilized for the same purpose, as is illustrated in Fig 1.

IR light is created, transmitted and received by suitable means described below and conveniently arranged behind a window 1A in the lap top computer 1 and a similar window (not shown) in the telephone 2. The data transfer by means of an IR beam of light can be governed by an internationally accepted IrDA standard (IrDA=Infrared Data Association), setting up certain critera aiming at low cost implementation, low power requirements, directed, point-to-point connectivity, and high noise immunity.

Among features to be noticed are that the transmission can be performed over a distance of say 1 m and that the two devices need not be aligned with any precision.

The established IR link is bi-directional, but transmission and receiving in the form of pulses with a nominal minimum of 1.6 microseconds cannot occur concurrently. The data transmission rate may for example be in the region of 115 kbits/second, and the peak wavelength can be 0.85-0.90 µm.

A known device for establishing an IR link is shown in Fig 2. Such a device 3 is to be mounted behind said window in a mobile telephone or a lap top computer, preferably on a PCB (Printed Circuit Board) therein. The device contains a light transmitting LED (Light Emitting Diode) for IR light behind a first lens 4 as well as a light receiving photodiode behind a second lens 5. In the base portion 6 of the device electronic circuitry for handling the transmitted and received signals may be housed.

A device 7 according to the invention for the same purpose as the device 3 of Fig 2 is shown in Fig 3. This device only contains one single LED behind a lens 8. This LED has the dual purpose of both transmitting and receiving IR light. The use of the LED for receiving IR light is based on the knowledge that light transmitted to an LED creates a clearly detectable current from the LED. This LED accordingly acts as a transceiver. The base portion 9 of the device 7 contains electronic circuitry for the handling of the transmitted and received signals.

The size of the device 7 according to the invention may in principle be half as compared to the the prior art device according to Fig 2 without sacrificing any function, which is very advantageous in the design of mobile telephones and lap top computers, where a space saving is of outmost importance. Also, the new device may be less energy consuming than the conventional one, which is also very positive.

## Claims

1. A device in such an appliance as a mobile telephone (2), a lap top computer (1) or the like for wireless data transmission by means of IR light between such appliances, the device (7) comprising means for transmitting IR light and means for receiving IR light, **characterized in that** one single LED is utilized as the means both for transmitting and receiving IR light.

2. A device according to claim 1, **characterized in that** the device (7) besides the LED with its single lens (8) contains electronic circuitry for the handling of the transmitted and received signals.

3. A method for wireless data transmission to and from a device (7) included in an appliance such as a mobile telephone (2), a lap top computer (1) or the like by means of IR light, **characterized in that** IR light is transmitted from and received by one single LED in the device (7).

## Patentansprüche

1. Einrichtung in einem Gerät wie einem Mobiltelefon (2), einem Laptop-Computer (1) oder ähnlichem zur drahtlosen Datenübertragung mit Hilfe von IR-Licht zwischen solchen Geräten, wobei die Einrichtung (7) eine Vorrichtung zum Senden von IR-Licht umfasst und eine Vorrichtung zum Empfangen von IR-Licht, **dadurch gekennzeichnet, dass** eine einzelne LED sowohl zum Senden als auch zum Empfangen von IR-Licht verwendet wird.

2. Einrichtung nach Anspruch 1, **dadurch gekennzeichnet, dass** die Einrichtung (7) neben der LED mit ihrer einzelnen Linse (8) eine elektronische Schaltung umfasst zum Handhaben der gesendeten und empfangenen Signale.

3. Verfahren zur Drahtlosdatenübertragung zu und von einer Einrichtung (7), die in einem Gerät, wie zum Beispiel einem Mobiltelefon (2), einem Laptop-Computer (1) oder ähnlichem eingeschlossen ist, mit Hilfe von IR-Licht, **dadurch gekennzeichnet, dass** das IR-Licht von einer einzelnen LED in der Einrichtung (7) gesendet und empfangen wird.

## Revendications

1. Dispositif dans un appareil tel qu'un téléphone mobile (2), un ordinateur portable (1) ou similaires destiné à une transmission de données sans fil au moyen d'une lumière IR entre de tels appareils, le dispositif (7) comportant un moyen pour transmettre une lumière IR ainsi qu'un moyen pour recevoir une lumière IR, **caractérisé en ce qu'**une LED unique est utilisée comme le moyen pour émettre et recevoir à la fois de la lumière IR.

2. Dispositif selon la revendication 1, **caractérisé en ce que** le dispositif (7) contient, hormis la LED avec sa lentille (8) unique, un ensemble de circuits électroniques pour la prise en charge des signaux émis et reçus.

3. Procédé de transmission de données sans fil vers et en provenance d'un dispositif compris dans un appareil tel qu'un téléphone mobile (2), un ordinateur portable (1) ou similaires au moyen d'une lumière IR, **caractérisé en ce que** la lumière IR est transmise à partir de et reçue par une LED unique dans le dispositif (7).
